# EUROPÄISCHE PATENTANMELDUNG

(11) **EP 3 796 164 A1**
(43) Veröffentlichungstag der Anmeldung: **24.03.2021**
(21) Anmeldenummer: 19197775.0
(22) Anmeldetag: 17.09.2019
(51) Int. Cl.: G06F 9/50, H04L 29/08

(54) **VERFAHREN ZUR ÜBERLASTABWEHR IN EINER CONTAINER-VIRTUALISIERTEN RECHENVORRICHTUNG**

(71) Anmelder: Siemens Aktiengesellschaft, 80333 München (DE)
(72) Erfinder: Knierim, Christian, 81373 München (DE); Schattleitner, Angela, 83104 Tuntenhausen (DE)

(57) **Zusammenfassung**

Verfahren zur Überlastabwehr in einer Containervirtualisierten Rechenvorrichtung, die eine Computerimplementierte Anwendung durch mindestens einen Arbeitscontainer bereitstellt, aufweisend die folgenden Schritte:
- Empfangen (S1) einer Anfragenachrichten (REQ) zum Aufrufen der Anwendung,
- Überprüfen (S2) der aktuell vorliegenden Auslastung der Rechenvorrichtung gegenüber einem vorgegebenen Lastgrenzwert, und
- wenn die aktuelle Auslastung höher als der Lastgrenzwert ist, Weiterleiten (S3) der Anfragenachricht (REQ) an einen Lastabwehrcontainer (LC), der mindestens eine gegenüber dem Arbeitscontainer (WC) modifizierte Abarbeitungsform der Anwendung bereitstellt.

## Beschreibung

Die Erfindung betrifft ein Verfahren zur Überlastabwehr in einer Container-virtualisierten Rechenvorrichtung, die eine Computer-implementierte Anwendung durch mindestens einen Arbeitscontainer bereitstellt, sowie eine entsprechende Rechenvorrichtung und ein entsprechendes Computerprogrammprodukt.

Computer-implementierte Dienste, im Weiteren auch als Anwendung bezeichnet, werden häufig von einem Serversystem bereitgestellt. Ein Dienstnutzer fordert den Dienst über ein Kommunikationsnetz, wie beispielsweise das Internet, bei dem Serversystem an. Dabei wird die Anwendung häufig in einer als virtuellem Container bezeichneten Ausführungsumgebung auf dem Serversystem ausgeführt. Bei einer Container-Virtualisierung handelt es sich um eine Methode, um mehrere Instanzen eines Betriebssystems isoliert voneinander auf einem sogenannten Host-System zu betreiben. Im Gegensatz zu einer Virtualisierung mittels eines Hypervisors teilen sich die Container ein gemeinsames Betriebssystem und nur bestimmte Betriebssystemteile werden vervielfältigt und jedem Container separat zur Verfügung gestellt. Daher gilt die Container-Virtualisierung als besonders ressourcenschonend. Container gewährleisten eine getrennte Verwaltung der vom Host-System zugewiesenen Ressourcen. Ein Container, der eine bestimmte Anwendung bereitstellt, enthält alle zur Ausführung der Anwendung notwendigen Ressourcen und kann leicht als Datei transportiert und installiert werden. Ressourcen sind beispielsweise der Programmcode, ein Laufzeitmodul, Systemwerkzeuge, Systembibliotheken. Im Weiteren stellt ein Container eine bestimmte Anwendung bereit. Eine Anwendung ist somit in einem Container gekapselt.

Eine Anwendung wird häufig durch einen Containerpool, der einer Mehrzahl von Containern umfasst, bereitgestellt. Die Anzahl der für eine Anwendung verwendeten Container ist in der Regel hochskalierbar, sodass im Fall einer starken Auslastung der vorhandenen Container dynamisch neue Container aktiviert werden, die einen angeforderten Dienst bzw. Anwendung bereitstellen können. Über einen Lastverteiler, im Englischen auch als Loadbalancer bezeichnet, werden die Anwendungsanfragen, beispielsweise http (Hypertext Transferprotokoll) Requests, auf eine immer größer werdende Anzahl von Container verteilt. Dabei wird üblicherweise eine maximale Anzahl von Containern festgelegt, um einerseits die Kosten für die Bereitstellung der Anwendung zu deckeln und eine Schädigung der Rechenvorrichtung bzw. des darunterliegenden Systems zu unterbinden.

Wenn die maximale Anzahl der Container erreicht ist und die Anzahl der Anfragenachrichten pro Zeiteinheit weiterhin steigt bzw. die Anzahl der maximal parallel verarbeitbaren offenen Verbindungen überschritten wird, werden Anfragenachrichten in der Regel nicht bearbeitet und beispielsweise eine Fehlermeldung als Antwort auf die Anfrage an den Benutzer zurückgesendet. Eine durch eine Vielzahl von Anwendungsanfragen erzeugte Überlast der Rechenvorrichtung, auch als Denial of Service DoS Angriff bezeichnet, wird häufig bewusst durch einen bösartigen Dritten oder sogenannte Bots erzeugt. Die Anwendung ist dann durch berechtigte Anwender nicht mehr zugänglich.

Bei einer Bereitstellung einer Anwendung durch ein Containervirtualisiertes System werden bei Überlastsituationen die gleichen Maßnahmen wie bei Bereitstellung durch ein herkömmliches System ergriffen, wobei der Fokus auf der Skalierbarkeit der Container liegt. Mit Skalierbarkeit wird dabei das Verfahren bezeichnet, das bei zunehmender Last zusätzliche Container, die die gleiche Anwendung bereitstellen, generiert werden und Anfragenachrichten zur Anwendung auf den oder die weiteren Container verteilt und dort abgearbeitet werden. Weitere Maßnahmen in einer Überlastsituation sind ein sogenanntes Overprovisioning, das heißt es werden mehr Container als für die Bearbeitung der üblichen Anzahl von Anfragenachrichten notwendig sind, bereitgehalten. Diese können bei außergewöhnlichen Lastaufkommen die Anfragenachrichten bearbeiten. Eine weitere Maßnahme ist ein automatisiertes Hochskalieren von Ressourcen mit einer sehr hohen Obergrenze, ein Zusammenlegen von Containerpools mit weiteren Pools oder Umleitung auf weitere Pools, speziell auf Cluster in einer Cloud-Umgebung. Des Weiteren sind Maßnahmen bekannt, die versuchen einen Angriff, insbesondere einen Angriff durch Vielanfragen und eine dadurch provozierte Abweisung von Anfragen, zu erkennen und die als schadhaft eingestuften Anfragenachrichten nicht zu bearbeiten oder umzuleiten. Des Weiteren kann ein Teil der Anfragenachrichten ohne weitere Anzeichen verworfen und nicht bearbeitet werden.

Die Aufgabe der vorliegenden Erfindung ist es, eine verbesserte Maßnahme bei Überlastsituationen in einer Container-virtualisierten Rechenvorrichtung bereitzustellen, bei der weniger berechtigte Anfragenachrichten für eine Anwendung abgewiesen werden und somit die Dienstqualität verbessert wird.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Überlastabwehr in einer Container-virtualisierten Rechenvorrichtung, die eine Computer-implementierte Anwendung durch mindestens einen Arbeitscontainer bereitstellt, aufweisend die folgenden Schritte:
- Empfangen einer Anfragenachricht zum Aufrufen der Anwendung,
- Überprüfen der aktuell vorliegenden Auslastung der Rechenvorrichtung gegenüber einem vorgegebenen Lastgrenzwert, und
- wenn die aktuelle Auslastung höher als der Lastgrenzwert ist, Weiterleiten der Anfragenachricht an einen Lastabwehrcontainer, der mindestens eine gegenüber dem Arbeitscontainer modifizierte, insbesondere lastreduzierende Abarbeitungsform der Anwendung bereitstellt.

In vorteilhafter Weise wird eine Anfragenachricht bei einer Überlastsituation der Rechenvorrichtung, die durch den Lastgrenzwert vorgegeben wird, nicht verworfen, sondern auf einen speziellen Lastabwehrcontainer weitergeleitet, der eine ressourcenschonende Abarbeitung der Anfrage ermöglicht. Somit erzeugt die Bereitstellung der Anwendung weniger Ressourcen als bei Abarbeitung durch einen herkömmlichen Arbeitscontainer und es können dadurch auch in Überlastsituationen mehr neue Anfragenachrichten bearbeitet werden und die Anwendung zumindest in modifizierter Form bereitgestellt werden. Wenn die Lastgrenze nicht erreicht ist, wird die Anfrage unverändert and den Arbeitscontainer weitergeleitet.
Ein Arbeitscontainer bezeichnet dabei einen Container in einer Container-virtualisierten Rechenvorrichtung, der eine unmodifizierte, normale Abarbeitungsform, das heißt eine Abarbeitungsform in Normalbetrieb bereitstellt. Ein Lastabwehrcontainer stellt im Gegensatz zum Arbeitscontainer die Anwendung in modifizierter Form bereit und umfasst Funktionen, die die Anzahl der Anfragenachrichten oder die Ressourcen zur Bereitstellung der Anwendung reduziert. Eine solche Funktion prüft beispielsweise, ob die Anfrage von einem berechtigten Nutzer gesendet wurde, und leitet lediglich Anfragenachrichten von berechtigten Nutzern weiter.

In einer vorteilhaften Ausführungsform wird das Überprüfen in einer Lastverteilungseinrichtung durchgeführt und die Lastverteilungsvorrichtung leitet die Anfragenachricht abhängig vom Überprüfungsergebnis an einen Arbeitscontainer oder an einen Lastabwehrcontainer weiter.

Eine solche Lastverteilungseinrichtung kann beispielsweise ein Loadbalancer sein, der von einer Software zur Orchestrierung von Containern bereitgestellt wird. Eine Lastverteilungseinrichtung arbeitet sehr effizient und kann somit eine hohe Anzahl von Anfragenachrichten in kurzer Zeit überprüfen und weiterleiten.

In einer vorteilhaften Ausführungsform wird das Überprüfen und Weiterleiten in einem Arbeitscontainer durchgeführt.

Dies hat den Vorteil, dass vorhandene Lastverteilungseinrichtungen unverändert bleiben und lediglich der Ablauf in den Arbeitscontainern um die Überprüfung und Weiterleitungsfunktion ergänzt werden müssen.

Überprüfungs- und Verteilungsregeln können dadurch unterschiedlich in verschiedenen Arbeitscontainern ausgeführt sein und einfach implementiert werden.

In einer vorteilhaften Ausführungsform wird das Überprüfen und Weiterleiten in einer Stellvertretereinheit, die in dem Arbeitscontainer angeordnet ist, durchgeführt.

Somit werden das Überprüfen und Weiterleiten im Container getrennt von der eigentlichen Anwendung bereitgestellt. Es wird eine direkte Einflussnahme auf die Anwendung selbst vermieden. Der Arbeitscontainer kann somit einfach um die Überprüfungs- und Weiterleitungsfunktion ergänzt werden.

In einer vorteilhaften Ausführungsform wird das Weiterleiten der Anfragenachricht auf einen Lastabwehrcontainer zustandsorientiert, insbesondere durch eine zustandsorientierte Paketinspektion, durchgeführt.

Üblicherweise wird eine Anfragenachricht zustandslos, auch als stateless bezeichnet, auf einen beliebigen der vorhandenen Arbeitscontainer aus einem Pool von Arbeitscontainern verteilt. Wird eine Überlastsituation erkannt, das heißt der vorgegebene Lastgrenzwert überschritten, wird die Anfragenachricht und alle für die Bereitstellung der Anwendung weitere Nachrichten zustandsorientiert, beispielsweise durch eine zustandsorientierte Paketüberprüfung, an den einen vorhandenen Lastabwehrcontainer oder an einen Lastabwehrcontainerpool, der mehrere Lastabwehrcontainer enthält, weitergeleitet. Dies wird entweder durch eine Lastverteilungseinrichtung oder durch die Weiterleitfunktion in einem Arbeitscontainer bzw. in der Stellvertretereinheit innerhalb des Arbeitscontainers angewendet. Somit ist sichergestellt, dass die durch den Lastabwehrcontainer bereitgestellte modifizierte Abarbeitungsform der Anwendung in allen Schritten korrekt und vom gleichen Lastabwehrcontainer durchgeführt wird.

In einer vorteilhaften Ausführungsform weist der Lastgrenzwert unterschiedliche Lastart-spezifische Grenzwerte auf, die abhängig von der Art der aktuell an der Rechenvorrichtung vorliegenden Auslastung sind.

Somit kann auf eine unterschiedliche Art der Last mit unterschiedlichen Maßnahmen reagiert werden. Unterschiedliche Arten der Überlast sind beispielsweise das Erreichen einer maximalen Anzahl von Arbeitscontainern, eine stoßartige Überlast durch eine hohe Anzahl von Anfragenachrichten pro Zeiteinheit oder zu viele parallel offene Anwendungen sein. Unterschiedliche Arten von Überlast können auch durch das Auswerten von Fehlerlogs der Anwendung, die im Container betrieben werden, gegeben sein. Eine Lastart-spezifischer Grenzwert kann auch durch die eine vorgegebene maximale Antwortzeit auf eine eingegangene Anfragenachricht vorgegeben sein. Somit kann flexibel auf die unterschiedlichen Arten der Überlast und der mit der entsprechenden Überlast verbundenen Störung der Rechenvorrichtung reagiert werden.

In einer vorteilhaften Ausführungsform wird die Anfragenachricht abhängig von der Art der aktuell vorliegenden Auslastung auf unterschiedliche Lastabwehrcontainer, die unterschiedliche modifizierte, lastreduzierende Abarbeitungsformen der Anwendung bereitstellen, weitergeleitet.

In vorteilhafterweise können somit Lastabwehrcontainer optimal auf eine Lastart zugeschnitten bzw. konfiguriert werden. Bei Vorliegen einer hohen Anzahl von Anfragenachrichten pro Zeiteinheit, die beispielsweise auf automatisch generierte Anfragenachrichten hindeutet, kann beispielsweise durch Vorschalten eines Challenge Response-Verfahrens, beispielsweise durch Senden eines Captchas, das üblicherweise eine Eingabe durch einen menschlichen Nutzer benötigt, überprüft werden. Wird die Abfrage durch das Captcha nicht korrekt beantwortet, gilt die Anfrage als bösartig und wird nicht weiterbearbeitet. Alternativ könnte bei Überlast durch Überschreitung einer maximalen Anzahl von Verbindungen pro Sekunde ein Lastabwehrcontainer mit einer lastreduzierenden Abarbeitungsvariante verwendet werden, bei der beispielsweise durch Verzicht auf dynamisch erzeugte Webinhalte, die die Rechenvorrichtung stark belasten, Rechenleistung gespart werden. Es wird beispielsweise eine Antwortnachricht gesendet, die beispielsweise eine Wartungszeit mit statischem Inhalt zeigt, gesendet. Bei zu vielen parallelen Anfragen, die nicht geschlossen werden, könnte der Überlastcontainer mit kürzeren Timeouts arbeiten.

In einer vorteilhaften Ausführungsform wird das Weiterleiten zusätzlich abhängig von mindestens einem der folgenden Kriterien durchgeführt, nämlich abhängig von einer Art der angeforderten Anwendung, einer Kennung eines Senders der Anfragenachricht oder einer Rolle des Nutzers der Anfragenachricht.

Somit kann dynamisch und abhängig von den Kriterien das Weiterleiten insbesondere auf einen Lastabwehrcontainer durchgeführt werden. Es können somit unterschiedliche Lastcontainer mit spezifischen Lastabwehrfunktionen abhängig von dem überprüften Kriterium erstellt und genutzt werden. Nachteilig daran ist lediglich, dass die Verteilung der Anfragenachrichten weitere Überprüfungen notwendig sind und somit der Weiterleitvorgang mehr Zeit benötigt.

In einer vorteilhaften Ausführungsform wird im Lastabwehrcontainer die Anfragenachricht gegenüber einer Lastverteilungsregel überprüft und abhängig vom Prüfergebnis mindestens eine durch die Lastverteilungsregel vorgegebene modifizierte Abarbeitungsform der Anwendung ausgeführt.

Dies hat den Vorteil, dass in einem einzelnen Lastabwehrcontainer unterschiedliche modifizierte Abarbeitungsformen der Anwendung ausgeführt werden, und diese durch Überprüfen der Anfragenachricht gegenüber einer Lastverteilungsregel ausgewählt werden. Dies hat den weiteren Vorteil, dass die allgemeine Verteilung der Anfragenachrichten auf insbesondere die Arbeitscontainer ohne zusätzliche Überprüfung der Anfragenachricht selbst und somit zeiteffizient durchgeführt werden kann. Eine Überprüfung der Anfragenachricht in einem Lastabwehrcontainer wird lediglich bei bereits erkannter Überlast durchgeführt. Dies sind lediglich ein Bruchteil der Anfragenachrichten, die in der Rechenvorrichtung empfangen werden.

In einer vorteilhaften Ausführungsform wird im Lastabwehrcontainer die Anfragenachricht gegenüber einem Angriffsmuster, das insbesondere bei einer Angriffsdatenbank abgefragt wird, analysiert. Zudem können mittels Datenaustausch mit IT-Sicherheits-Dienstleistern die Angriffsmuster aktualisiert werden und schnell auf weltweit auftretende Angriffe reagiert werden (Berücksichtigung der Global Threat Landscape).

In einer weiteren vorteilhaften Ausführungsform wird im Lastabwehrcontainer die Anfragenachricht zusätzlich zu Angriffsmustern gegenüber Heuristiken, die im Vorfeld durch eine Kalibrierung des Systems ermittelt werden, analysiert. Die Heuristik beschreibt das übliche Verhalten der Anfragenden z.B. dass außerhalb der Geschäftszeiten deutlich weniger Anfragen gestellt werden.

Somit können im Lastabwehrcontainer Angriffssignaturen, die allgemein ermittelt und über Angriffsdatenbanken bereitgestellt und beispielsweise kontinuierlich aktualisiert werden, für die Analyse der Anfragenachricht und ein Erkennen von Angriffsmustern eingesetzt werden. Wird ein entsprechendes Angriffsmuster erkannt, kann die Anfragenachricht als schädlich gekennzeichnet werden und Abwehr-Maßnahmen getroffen werden, beispielsweise kann die Anfrage nicht bearbeitet und/oder an eine übergeordnete Einheit gemeldet werden.

Alle beschriebenen Indikatoren für DoS Angriffe können vom Container zur Berechnung einer DoS-Risikobewertung (DoS-Risk-Score) für eine Anfrage herangezogen werden. Der DoS-Risk-Score kann weiteren Diensten und Anwendungen über eine Schnittstelle zur Verfügung gestellt werden, die die Anfrage bearbeiten oder übertragen.

In einer vorteilhaften Ausführungsform werden ein oder mehrere Lastabwehrcontainer abhängig von der Auslastung der Rechenvorrichtung, insbesondere zusätzlich zu den vorhandenen Arbeitscontainern oder als Ersatz für einen vorhandenen Arbeitscontainer, bereitgestellt.

Durch dynamisch, abhängig von der Auslastung der Rechenvorrichtung zuschaltbare Lastabwehrcontainer kann eine größere Anzahl von Anfragenachrichten ohne einfaches Abweisen oder Nichtbearbeiten von Anfragenachrichten abgearbeitet und einen zumindest reduzierte Abarbeitungsformen der Anwendung dem Nutzer bereitgestellt werden. Die angeforderte Anwendung kann dem Nutzer häufiger bereitgestellt werden. Somit wird die Dienstqualität für den Nutzer verbessert.

Ein zweiter Aspekt der Erfindung betrifft eine Rechenvorrichtung zum Container-virtualisierten Bereitstellen einer Computer-implementierten Anwendung durch mindestens einen Arbeitscontainer, aufweisend eine Empfangseinrichtung, die derart ausgebildet ist, eine Anfragenachricht zum Aufrufen der Anwendung zu empfangen, eine Prüfungseinheit, die derart ausgebildet ist, die aktuell vorliegende Auslastung der Rechenvorrichtung gegenüber einem vorgegebenen Lastgrenzwert zu überprüfen und eine Weiterleitungseinheit, die derart ausgebildet ist, die Anfragenachricht an einen Lastabwehrcontainer, der mindestens eine gegenüber dem Arbeitscontainer modifizierte, insbesondere lastreduzierende Abarbeitungsform der Anwendung bereitstellt, weiterzuleiten, wenn die aktuelle Auslastung höher als der Lastgrenzwert ist.

Die erfindungsgemäße Rechenvorrichtung stellt mit den gleichen Ressourcen gegenüber einer herkömmlichen Rechenvorrichtung die Anwendung mit verbesserter Dienstqualität bereit, da mehr Anfragenachrichten bearbeitet und weniger Anfragenachrichten von berechtigten Nutzern verworfen werden.

In einer vorteilhaften Ausführungsform sind die Steuerungseinheit in einer Lastverteilungseinrichtung ausgebildet und die Lastverteilungsvorrichtung leitet die Anfragenachricht abhängig vom Überprüfungsergebnis an einen Arbeitscontainer oder an einen Lastabwehrcontainer weiter.

In einer vorteilhaften Ausführungsform ist die Steuerungseinheit in einem Arbeitscontainer, insbesondere in Form einer Stellvertretereinheit, ausgebildet.

Die Steuerungseinrichtung kann dabei in jedem der aktiven Arbeitscontainer ausgebildet sein. Somit kann Lastverteilungseinrichtung unverändert und damit zeitoptimiert beibehalten werden. Die Steuerungseinrichtung im Arbeitscontainer kann flexibel für die Anwendung angepasst werden.

Ein dritter Aspekt der Erfindung betrifft ein Computerprogrammprodukt umfassend ein computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 11 durchzuführen.

Sofern es in der nachfolgenden Beschreibung nicht anders angegeben ist, beziehen sich die Begriffe "Empfangen", "Überprüfen", "Weiterleiten" und dergleichen vorzugsweise auf Handlungen und/oder Prozesse und/oder Verarbeitungsschritte (auch: Kommunikationsprotokolle), die Daten verändern und/oder erzeugen und/oder die Daten in andere Daten überführen, wobei die Daten insbesondere als physikalische Größen dargestellt werden oder vorliegen können, beispielsweise als elektrische Impulse. Der Ausdruck Rechenvorrichtung bezeichnet elektronische Geräte mit Datenverarbeitungseigenschaften und kann beispielsweise ein oder mehrere Server sein, die insbesondere durch mehrere Cloud-Nutzer geteilt verwendet und als Cloud-System bezeichnet werden, sein, die rechnergestützt Daten verarbeiten können und mindestens einen Prozessor zur Datenverarbeitung umfassen.

Unter "Computer-implementierte Anwendung" kann im Zusammenhang mit der Erfindung beispielsweise eine Implementierung der Anwendung verstanden werden, bei dem insbesondere ein Prozessor mindestens einen Verfahrensschritt der Anwendung ausführt. Die jeweilige "Einheit" oder "Einrichtung", zum Beispiel die Empfangs- oder Steuerungseinheit oder die Lastverteilungseinrichtung kann hardwaretechnisch und/oder auch softwaretechnisch implementiert sein. Bei einer hardwaretechnischen Implementierung kann die jeweilige Einheit als Vorrichtung oder als Teil einer Vorrichtung zum Beispiel als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Ein Computerprogrammprodukt, wie zum Beispiel ein Computerprogrammmittel, kann beispielsweise als Speichermedium oder auch in Form einer herunterladbaren Datei von einem Server in einem Netzwerk bereitgestellt oder geliefert werden.

Ausführungsbeispiele des erfindungsgemäßen Verfahrens sowie der erfindungsgemäßen Rechenvorrichtung sind in den Zeichnungen beispielhaft dargestellt und werden anhand der nachfolgenden Beschreibung näher erläutert. Es zeigen:
- Fig. 1: eine erste Ausführungsform des erfindungsgemäßen Verfahrens als Flussdiagramm;
- Fig. 2: ein zweites Ausführungsbeispiel des erfindungsgemäßen Verfahrens mit einem Überprüfen in einer Lastverteilungseinrichtung in schematischer Darstellung;
- Fig. 3: eine dritte Ausführungsform des erfindungsgemäßen Verfahrens mit einem Überprüfen in einem Arbeitscontainer in schematischer Darstellung;
- Fig. 4: ein erstes Ausführungsbeispiel der erfindungsgemäßen Rechenvorrichtung in Blockdarstellung; und
- Fig. 5: ein zweites Ausführungsbeispiel der erfindungsgemäßen Rechenvorrichtung in Blockdarstellung.

Einander entsprechende Teile sind in allen Figuren mit den gleichen Bezugszeichen versehen.

Eine Computer-implementierten Anwendung wird von einer Rechenvorrichtung bereitgestellt, die eine einzige oder mehrerer Recheneinheiten, wie beispielsweise Prozessoren oder auch Servereinheiten, aufweist. Die Rechenvorrichtung wird in einer Container-virtualisierten Betriebsweise betrieben. Eine Anwendung wird dabei durch Container, in denen neben einem Programm zur Abarbeitung der Anwendung auch Betriebssystemressourcen, Laufzeitmanagement, Module oder auch Softwarebibliotheken, die zur Bereitstellung der Anwendung nötig sind, gekapselt und als abgeschlossenes System ausgeführt.

Ein Arbeitscontainer führt üblicherweise eine Vielzahl von Instanzen einer Anwendung in einer "normalen" Abarbeitungsform aus. Können neue Anfragenachrichten durch einen Arbeitscontainer nicht mehr abgearbeitet werden, so wird üblicherweise ein neuer Arbeitscontainer aktiviert und zur Bearbeitung dieser weiteren Anfragenachrichten bereitgestellt.

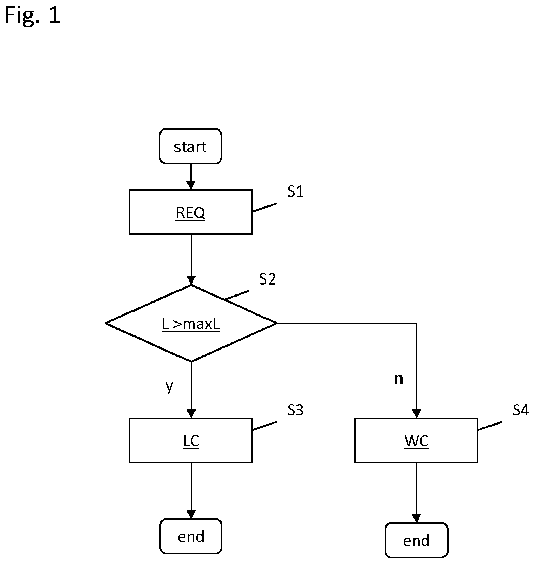

Ein solches zusätzliches lastbasiertes Aktivieren von Containern wird auch als Autoscaling bezeichnet. Ist eine maximale Anzahl von Arbeitscontainern erreicht, werden üblicherweise weitere Anfragenachrichten abgewiesen und beispielsweise mit einer Fehlermeldung an den Sender beantwortet. Um ein solches Abweisen von zulässigen Anfragenachrichten zu reduzieren, wird ein Verfahren wie in Fig. 1 dargestellt, vorgeschlagen.

In Schritt S1 wird eine Anfragenachricht REQ zum Aufrufen bzw. Starten einer Computer-implementierten Abwendung in der Rechenvorrichtung empfangen. Daraufhin wird im Verfahrensschritt S2 die aktuell vorliegende Auslastung L der Rechenvorrichtung gegenüber einem vorgegebenen Lastgrenzwert maxL überprüft. Wird bei dieser Überprüfung festgestellt, dass die aktuelle Auslastung L höher als der Lastgrenzwert maxL ist, so wird die Anfragenachricht REQ an einen Lastabwehrcontainer LC, der mindestens eine gegenüber dem Arbeitscontainer WC modifizierte, lastreduzierende Abarbeitungsform der Anwendung bereitstellt, weitergeleitet, siehe S3. Ist die Auslastung L kleiner oder gleich dem Lastgrenzwert maxL, so wird die Anfragenachricht REQ an einen Arbeitscontainer WC, siehe Schritt S4, weitergeleitet und durch eine herkömmliche Abarbeitungsform der Anwendung bereitgestellt.

Der Lastabwehrcontainer LC beantwortet die Anfragenachricht, indem beispielsweise zusätzliche Maßnahmen zur Bekämpfung von Vielanfrageangriffen, auch als (D)DoS Angriff bezeichnet, auf Anwendungsebene ausgeführt werden. Solche Maßnahmen sind Funktionen, um zulässige Anfragenachrichten zu erkennen bzw. als unzulässige Anfragenachrichten erkannte Anfragenachrichten abzuweisen. Solche Maßnahmen werden beispielsweise vor dem Ausführen der eigentlichen Anwendung ausgeführt und stellen zusammen mit der Anwendung selbst eine modifizierte, lastreduzierende Abarbeitungsform der Anwendung dar. Eine solche Maßnahme ist beispielsweise ein Vorschalten eines Frage-Antwort-Verfahrens, auch Challenge-Response-Verfahren bezeichnet, vor die eigentliche Ausführung der Anwendung. Dabei sendet die Rechenvorrichtung dem anfragenden Gerät oder Nutzer eine Frage, die das Gerät oder der Nutzer beantwortet und von der Rechenvorrichtung geprüft wird. Dies kann beispielsweise ein kryptografisches Challenge-Response-Verfahren sein, bei dem die Frage durch ein kryptografisches Verfahren im Gerät verändert und an die Rechenvorrichtung zurückgesendet wird und in der Rechenvorrichtung mit dem erwarteten Ergebnis verglichen wird. Das Frage-Antwort-Verfahren kann auch anwendungsorientiert sein, sodass die Anwendung die Frage einer vorgegebenen Weise verändert und an die Anwendung in der Rechenvorrichtung zurücksendet. Dies kann beispielsweise das Lösen einer mathematischen Aufgabe mit der Frage als Eingabeparameter sein. Das Frage-Antwort-Verfahren kann transparent für den Nutzer der Anwendung sein oder aber auch eine Nutzereingabe verlangen. Dies ist beispielsweise bei einem Captcha der Fall, bei dem beispielsweise die Anzahl eines bestimmten Gegenstandes auf einem Bild, das an den Benutzer gesendet wird, vom Nutzer beantwortet werden.

Des Weiteren kann in einer modifizierte lastreduzierende Abarbeitungsform der Anwendung beispielsweise statt einer dynamisch erzeugten Seiteninhalt, der eine besonders hohe Last für die Rechenvorrichtung darstellt, lediglich eine statischer, vorgegebener Seiteninhalt übermittelt werden. In einer weiteren Variante wird eine Anfragenachricht nur dann mit spezifischen Informationen beantwortet, wenn diese Informationen bereits im Speicher der Rechenvorrichtung vorliegen, beispielsweise durch eine vorherige Anfrage. Als weitere modifizierte lastreduzierende Abarbeitungsform kann beispielsweise ein Seiteninhalt mit geringerer Auflösung zur Darstellung auf die Anfragenachricht zurückgeschickt werden.

Eine weitere modifizierte lastreduzierende Abarbeitungsform der Anwendung, die der Arbeitscontainer bereitstellt, wird beispielsweise durch eine zumindest teilweise Auswertung der Anfragenachricht erreicht. Dabei wird beispielsweise eine IP Adresse des Senders, eine Rolle des Nutzers oder eine Prioritätskennung ermittelt und lediglich Anfragenachrichten von berechtigten Sendern oder Rollen oder für priorisierte Dienste bearbeitet, die beispielsweise durch eine Positivlisten vorgegeben sind, weiterbearbeitet. Alle anderen Anfragenachrichten werden nicht bearbeitet bzw. abgelehnt. Eine Rolle des Nutzers kann beispielsweise durch unterschiedlich priorisierte Nutzerklassen vorgegeben sein, beispielsweise "bevorzugter Anwender", "Premium-Anwender". Eine Rolle des Nutzers kann aber auch "Administrator", "Dienstanbieter" oder ähnliches sein. Es kann auch eine bevorzugte Bearbeitung von Anfragenachrichten abhängig von geografischen Regionen erfolgen, sodass Anfragenachrichten von räumlich lokalisierbaren Angreifern gezielt verworfen bzw. nicht bearbeitet werden.

In einer weiteren Variante wird in einem Lastabwehrcontainer die Anfragenachricht gegenüber einem Angriffsmuster analysiert und somit manipulierte Anfragenachrichten vor der weiteren Bearbeitung erkannt. Bei einer als manipuliert erkannten Nachricht kann beispielsweise ein Warnsignal erzeugt und/oder die Anfragenachricht nicht weiterbearbeitet werden. In einer weiteren Variante wird in einem Lastabwehrcontainer die Anfragenachricht gegenüber einer Heuristik also ungewöhnliche Verhaltensmuster bei Anfragen, analysiert. Somit werden manipulierte Anfragenachrichten vor der weiteren Bearbeitung mit hoher Wahrscheinlichkeit als manipuliert erkannt und klassifiziert. Bei einer als manipuliert klassifizierten Nachricht kann beispielsweise ein Warnsignal erzeugt und/oder die Anfragenachricht nicht weiterbearbeitet werden.

Der Lastgrenzwert maxL kann abhängig von der Art der aktuell an der Rechenvorrichtung vorliegenden Auslastung unterschiedliche Lastart-spezifische Grenzwerte aufweisen. Ein Lastart-spezifischer Grenzwert ist beispielsweise ein Wert für die maximale Anzahl an Arbeitscontainern, die für den Dienst konfiguriert sind, ein Wert für eine Anzahl von Anfragenachrichten pro Sekunde, ein Wert für eine Anzahl von parallel offener Anfrageverbindungen bzw. parallellaufenden Anwendungen sein oder auch ein Wert für eine maximale Anzahl von Fehlerlogs sein. Fehlerlogs werden durch Auswerten von Fehlern der Applikation, die in einem Arbeitscontainer betrieben werden, ermittelt und im Arbeitscontainer als Fehlerlogs gespeichert. Abhängig von einer entsprechenden Art der Überlast kann eine an die Situation angepasste Maßnahme ergriffen werden. Ist zum Beispiel die Anzahl der Anfragenachricht pro Sekunde zu hoch, ist ein Frage-Antwort-Verfahren geeignet, diese Zahl zu reduzieren. Dadurch kann beispielsweise ein maschinelles Aussenden von Anfragenachrichten durch sogenannte Bots erkannt und unterbunden werden. Überschreitet hingegen die Anzahl der parallel offenen Anfragenachrichten den für die Anwendung Lastart-spezifischen Grenzwert, könnte das Ausnutzen einer asymmetrischen Ressourcenverbrauchs aufseiten der Rechenvorrichtung mittels Restriktionen auf die Backend-Anfragen, also indem statische Inhalte anstatt dynamisch und ressourcenintensive Inhalte erstellt und an den Sender geschickt werden, eine Lösung sein. Eine solche Auswertung kann auch über einen Künstliche-Intelligenz-Sicherheitsalgorithmus betrieben werden.

In einer Variante stellt ein Lastcontainer LC alle beschriebenen modifizierten, lastreduzierenden Ausführungsformen der Anwendung bereit. Es können jedoch auch Lastabwehrcontainer bereitgestellt werden, die eine einzige oder eine Teilmenge der möglichen modifizierten, lastreduzierenden Abarbeitungsformen der Anwendung umfassen. Entsprechend kann eine Anfragenachricht abhängig von der Art der aktuell vorliegenden Auslastung auf einen jeweils spezifischen Lastabwehrcontainer, der eine für die Lastart optimierte Abarbeitungsform bereitstellt, verwendet werden.

Des Weiteren kann das Weiterleiten zusätzlich abhängig von mindestens einem weiteren Kriterium durchgeführt werden. Dazu wird die Anfragenachricht beim Überprüfen der Auslastung oder beim Weiterleiten zumindest teilweise analysiert. Insbesondere werden Angaben im Kopfteil der Anfragenachricht, die Information zum Sender und zur angefragten Anwendung enthalten, ausgewertet und abhängig beispielsweise von der angeforderten Anwendung oder abhängig von der Kennung des Senders der Anfragenachricht, beispielsweise dessen IP-Adresse, oder abhängig von der Rolle eines Nutzers der Anfragenachricht die Weiterleitung auf unterschiedliche Lastabwehrcontainer durchgeführt. Die Anfragenachricht kann auch abhängig von einer Sitzungskennung, auch als session cookie bezeichnet, die ebenfalls im Kopfteil der Anfragenachricht enthalten ist, weitergeleitet werden.

Abhängig von der Auslastung der Rechenvorrichtung bzw. des einen oder mehrerer vorhandener, aktiver Arbeitscontainer WC kann ein oder mehrere Lastabwehrcontainer LC bereitgestellt werden. Dabei kann entweder ein Lastabwehrcontainer zusätzlich zu den bereits vorhandenen Arbeitscontainern bereitgestellt werden oder aber als Ersatz für einen vorhandenen Arbeitscontainer hochgefahren werden.

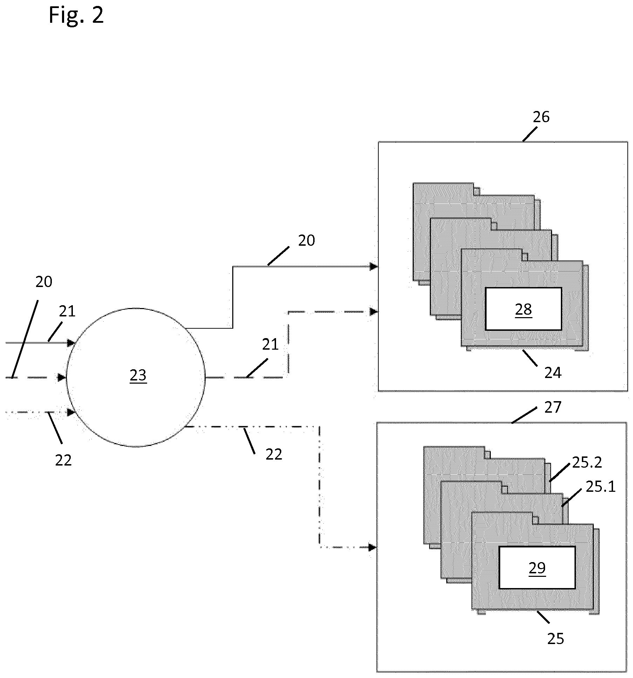

Fig. 2 zeigt eine Ausführungsform des Verfahrens, bei dem Anfragenachrichten 20, 21, 22 durch eine Lastverteilungseinrichtung 23 überprüft werden und abhängig vom Überprüfungsergebnis an einen Arbeitscontainer 24 oder an einen Lastabwehrcontainer 25 weitergeleitet werden. Ein Arbeitscontainer 24 stellt dabei die Anwendung in einer unmodifizierten Abarbeitungsform 28 bereit. Abhängig von der Anzahl der Anfragenachricht bzw. der Last für die Anwendung werden mehrere Arbeitscontainer 24 in einem Arbeitscontainerpool 26 bereitgestellt. Lastabwehrcontainer 25 stellen die Anwendung durch die modifizierte lastreduzierte Abarbeitungsform 29 bereit. Dabei können ebenfalls ein oder mehrere Lastabwehrcontainer 25, 25.1, 25.2 in einem Lastabwehrcontainerpool 27 bereitgestellt werden. Die Lastabwehrcontainer 25, 25.1, 25.2 können dabei in unterschiedlicher Ausprägung vorliegen. Die dargestellten Lastabwehrcontainer 25.1 und 25.2 stellen beispielsweise unterschiedliche modifizierte Abarbeitungsformen für die Anwendung bereit. Der Lastabwehrcontainer 25 kann beispielsweise eine Vielzahl verschiedener modifizierter Abarbeitungsformen umfassen. Die Lastabwehrcontainer 25, 25.1, 25.2 können entsprechend unterschiedliche Lastverteilungsregeln umfassen.

Die Verteilung der Anfragenachrichten wird durch die Lastverteileinrichtung 23 umgesetzt, die typischerweise durch eine sogenannten Orchstrierungssoftware, wie beispielsweise Kubernetes, implementiert ist. In der dargestellten Ausführungsform ist der Lastverteileinrichtung 23 die Auslastung der Rechenvorrichtung in Bezug auf die Anwendung bekannt. Die Lastverteileinrichtung 23 führt das Überprüfen der Auslastung sowie das Weiterleiten abhängig vom Ergebnis der Überprüfung aus. Die Orchestrierungssoftware muss die Überlastsituation erkennen und die Anfragenachricht auf einen Container mit eingebauten Lastabwehrfunktionen, also den modifizierten, lastreduzierenden Abarbeitungsformen 29 der Anwendung umleiten. Die Lastabwehrcontainer 25, 25.1, 25.2 werden ebenfalls orchestriert, um sie entsprechend der Last skalieren zu können. Wird ein Lastabwehrcontainer 25 gestartet, wird beispielsweise ein Arbeitscontainer 24 beendet, um eine Ressourcenverknappung zu verhindern. Alternativ können für die Lastabwehrcontainer 25 spezielle Ressourcen vorgehalten werden.

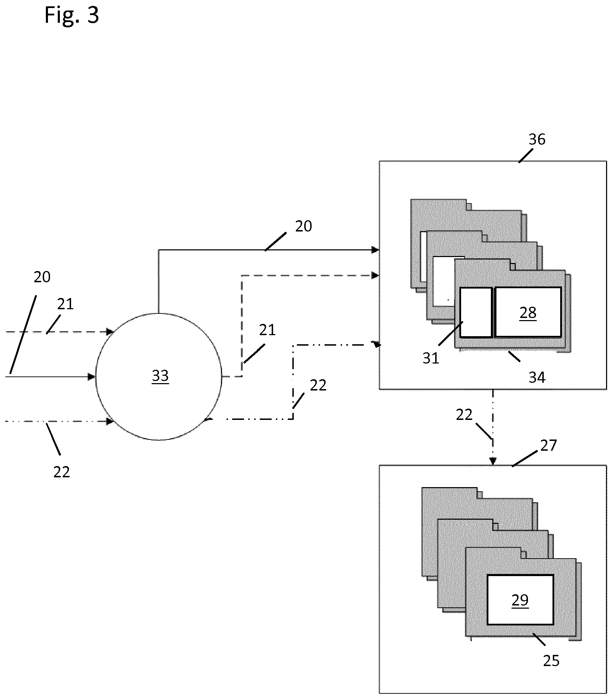

Fig. 3 zeigt eine Ausführungsform des Verfahrens, bei der die Überprüfung und Weiterleitung von Anfragenachrichten 20, 21, 22 nicht in einer Lastverteileinrichtung 33, sondern in jedem der Lastabwehrcontainer 34 des Lastabwehrcontainerpools 36 durchgeführt wird. Dazu ist beispielsweise eine Stellvertretereinheit 31 in jedem Arbeitscontainer 34 bereitgestellt.

Statt einer zentralen Erkennung der Überlastsituation durch die Orchestrierungssoftware in der Lastverteilereinrichtung 33 kann die Stellvertretereinheit 31, die einer unmodifizierten Abarbeitungsform 28 vorgeschaltet ist, die Weiterleitung lokal auf dem Arbeitscontainer 34 einleiten, indem die lokale Auslastung des entsprechenden Arbeitscontainers 34 überprüft wird. Alternativ kann die aktuell vorliegende Auslastung L durch die Orchestrierungssoftware, also insbesondere durch die Lastverteileinrichtung 33 der Stellvertretereinrichtung 31 zur Verfügung gestellt werden. Diese zur Verfügung gestellte vorliegende Auslastung wird zur Überprüfung der Anfragenachricht 20, 21,22 verwendet.

Um die Weiterleitung der Anfragenachrichten 20, 21,22 auf einen Lastabwehrcontainer durchführen zu können, muss die Weiterleitung durch eine zustandsorientierte Paketinspektion durchgeführt werden. Ein Paket ist ein Datenpaket, wie beispielsweise im Internet Protokoll definiert. In Fig. 2 sind Anfragenachrichten 20, 21 bzw. nachfolgende Verbindung zur Ausführung der Anwendung dargestellt. Diese Anfragenachrichten 20, 21 werden von der Lastverteilereinrichtung 23 zustandslos auf einen beliebigen Arbeitscontainer 24 weitergeleitet. Die zustandsorientierte Paketinspektion ist so implementiert, dass lediglich zwischen Anfragenachrichten 20, 21 unterschieden wird, die auf einen Arbeitscontainer 24 weitergeleitet werden und Anfragenachrichten 22 und ihre nachfolgenden Nachrichten, die auf einen Lastabwehrcontainer 25, 25.1, 25.2 geleitet werden. Eine zustandsorientierte Paketinspektion auf die einzelnen Arbeits- bzw. Lastabwehrcontainer 24, 25 innerhalb eines Arbeitscontainerpools 26 bzw. einem Lastabwehrcontainerpool 27 ist nicht erforderlich. Es kann somit zwischen den einzelnen Containern in einem Pool beliebig hin und her geschaltet werden.

In Fig. 3 verteilt die Lastverteileinrichtung 33 die Anfragenachrichten 20, 21, 22 zustandslos und somit beliebig auf die Arbeitscontainer 34 im Arbeitscontainerpool 36. Im Arbeitscontainerpool 36 ist in jedem Container 34 eine Stellvertretereinheit 31 installiert, die entscheidet, ob die Anfragenachricht 20, 21, 22 zur unmodifizierten Abarbeitungsform 28 der Anwendung oder an einen Lastabwehrcontainer 25 weitergeleitet wird. Das jeweilige Ziel der Weiterleitung, also entweder die unmodifizierte Abarbeitungsform 28 im Arbeitscontainer 34 oder die modifizierte Abarbeitungsform 29 im Lastabwehrcontainer 25, an die die Anfragenachricht weitergeleitet werden soll, muss jeder Stellvertretereinheit 31 mitgeteilt werden. Die Weiterleitung der Anfragenachricht 22 an einen Lastabwehrcontainer 25 wird in der Stellvertretereinheit 31 mittels zustandsorientierter Paketinspektion durchgeführt.

Es muss sichergestellt sein, dass die Lastabwehrcontainer 25 entweder permanent vorgehalten werden oder durch die Stellvertretereinheit 31 oder die Orchestrierungssoftware in der Lastverteilungseinrichtung 23 aktiviert werden kann.

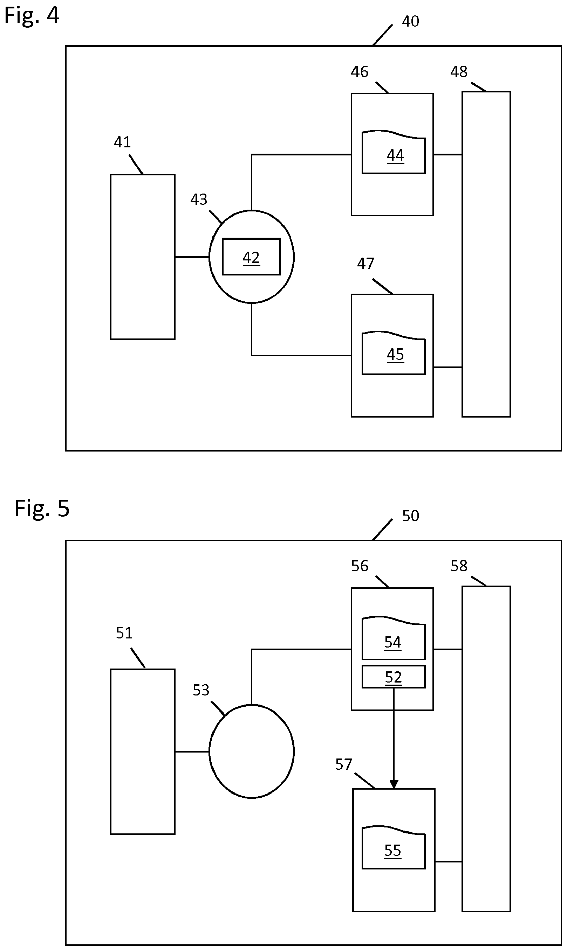

Fig. 4 zeigt nun eine Rechenvorrichtung 40, die eine Anwendung durch Container-Virtualisierung bereitstellt. Dabei greifen ein oder mehrere Arbeitscontainer 44 aus einem Arbeitscontainerpool 46 sowie ein oder mehrere Lastabwehrcontainer 45 aus einem Lastabwehrcontainerpool 47 auf ein gemeinsames Betriebssystem 48, das die Rechenvorrichtung bereitstellt, zu. Die Rechenvorrichtung 40 umfasst des Weiteren eine Empfangseinheit 41 sowie eine Lastverteileinrichtung 43. Die Lastverteileinrichtung 43 umfasst eine Steuereinheit 42, die derart konfiguriert ist, das Überprüfen und Weiterleiten des erfindungsgemäßen Verfahrens durchzuführen. Die Lastverteileinrichtung 43 ist insbesondere über eine Orchestrierungssoftware realisiert. Die Steuereinrichtung 42 umfasst eine Überprüfungseinheit sowie eine Weiterleitungseinheit, die integriert, wie dargestellt, oder separiert in zwei Teile ausgeführt sein. Die Steuereinrichtung 42 kann softwaretechnisch, beispielsweise als Teil der Orchestrierungssoftware oder auch hardwaretechnisch, beispielsweise einem oder auf mehreren Prozessoren ausgeführt werden.

Fig. 5 zeigt ein weiteres Ausführungsbeispiel einer Rechenvorrichtung 50, die entsprechend der Rechenvorrichtung 40 Container-virtualisiert eine Computer-implementierte Anwendung durch Arbeitscontainer 54 bzw. Lastcontainer 55 aus einem Arbeitscontainerpool 56 bzw. einem Lastabwehrcontainerpool 57 ausführt. Der Arbeitscontainerpool 56 sowie der Lastabwehrcontainerpool 57 greifen auf ein gemeinsames Betriebssystem 58 zu. Die Rechenvorrichtung 50 umfasst des Weiteren eine Empfangseinheit 51 sowie eine Lastverteileinrichtung 53. Die Lastverteileinrichtung 53 leitet dabei alle empfangenen Anfragenachrichten von der Empfangseinheit 51 an den Arbeitscontainerpool 56 weiter. Dabei wird jede Anfragenachricht einer dem Arbeitscontainer 54 vorgeschalteten Stellvertretereinheit 52 weitergeleitet. Die Stellvertretereinheit 52 leitet die Anfragenachricht bei Überlast an einen Lastabwehrcontainer 55 im Lastcontainerpool 57 weiter.

Somit setzt eine Lastabwehr durch das Hinzuschalten von Lastabwehrcontainern frühzeitig bei zunehmender Last ein und kann so bereits Last abwehren, bevor die Rechenvorrichtung bzw. die Arbeitscontainer in Überlast gelangen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Überlastabwehr in einer Container-virtualisierten Rechenvorrichtung, die eine Computer-implementierte Anwendung durch mindestens einen Arbeitscontainer bereitstellt, aufweisend die folgenden Schritte:
- Empfangen (S1) einer Anfragenachrichten (REQ, 20, 21, 22) Aufrufen der Anwendung,
- Überprüfen (S2) der aktuell vorliegenden Auslastung (L) der Rechenvorrichtung gegenüber einem vorgegebenen Lastgrenzwert (maxL), und
- wenn die aktuelle Auslastung höher als der Lastgrenzwert (maxL) ist, Weiterleiten (S3) der Anfragenachricht (REQ, 20, 21, 22) an einen Lastabwehrcontainer (LC, 25), der mindestens eine gegenüber dem Arbeitscontainer (WC, 24) modifizierte Abarbeitungsform (29) der Anwendung bereitstellt.

2. Verfahren nach Anspruch 1, wobei das Überprüfen in einer Lastverteilungseinrichtung (23) durchgeführt wird und die Lastverteilungseinrichtung (23) die Anfragenachricht abhängig vom Überprüfungsergebnis an einen Arbeitscontainer (24) oder an einen Lastabwehrcontainer (25) weiterleitet.

3. Verfahren nach Anspruch 1, wobei das Überprüfen (S2) und Weiterleiten (S3) in einem Arbeitscontainer (24) durchgeführt wird.

4. Verfahren nach Anspruch 3, wobei das Überprüfen (S2) und Weiterleiten (S3) in einer Stellvertretereinheit (31), die in dem Arbeitscontainer (34) angeordnet ist, durchgeführt wird.

5. Verfahren nach einem der vorhergehenden Ansprüche, wobei das Weiterleiten (S3) der Anfragenachricht (REQ, 20, 21, 22) auf einen Lastabwehrcontainer (24,34) mittels einer zustandsorientierte Paketinspektion durchgeführt wird.

6. Verfahren nach einem der vorhergehenden Ansprüche, wobei der Lastgrenzwert (maxL) unterschiedliche Lastart-spezifische Grenzwerte aufweist, die abhängig von der Art der aktuell an der Rechenvorrichtung (40, 50) vorliegenden Auslastung sind.

7. Verfahren nach einem der vorhergehenden Ansprüche, wobei die Anfragenachricht (REQ, 20, 21, 22) abhängig von der Art der aktuell vorliegenden Auslastung auf unterschiedliche Lastabwehrcontainer (25, 25.2, 25.2), die unterschiedliche modifizierte, lastreduzierende Abarbeitungsformen der Anwendung bereitstellen, weitergeleitet wird.

8. Verfahren nach einem der vorhergehenden Ansprüche, wobei das Weiterleiten (S3) zusätzlich abhängig von mindestens einem der folgenden Kriterien durchgeführt wird:
- einer Art der angeforderten Anwendung,
- einer Kennung eines Senders der Anfragenachricht (REQ, 20, 21, 22),
- einer Rolle eines Nutzers der Anfragenachricht (REQ, 20, 21, 22).

9. Verfahren nach einem der vorhergehenden Ansprüche, wobei im Lastabwehrcontainer (25) die Anfragenachricht (22) gegenüber ungewöhnlichen Verhaltensmustern bei Anfragen, die im Vorfeld durch eine Kalibrierung der Rechenvorrichtung (40, 50) ermittelt werden, analysiert wird.

10. Verfahren nach einem der vorhergehenden Ansprüche, wobei im Lastabwehrcontainer (25) die Anfragenachricht (22) gegenüber einem Angriffsmuster, das insbesondere bei einer Angriffsdatenbank abgefragt wird, analysiert wird.

11. Verfahren nach einem der vorhergehenden Ansprüche, wobei ein oder mehrere Lastabwehrcontainer (25, 25.2, 25.2) abhängig von der Auslastung der Rechenvorrichtung (40, 50), insbesondere zusätzlich zu den vorhandenen Arbeitscontainern (24, 34) oder als Ersatz für einen vorhandenen Arbeitscontainer (24, 34), bereitgestellt werden.

12. Rechenvorrichtung (40, 50) zum Container-virtualisierten Bereitstellen einer computer-implementierte Anwendung durch mindestens einen Arbeitscontainer (44, 45), aufweisend eine:
- Empfangseinheit (41, 51), die derart ausgebildet ist, eine Anfragenachrichten zum Aufrufen der Anwendung zu empfangen,
- Steuerungseinheit (42, 52), die derart ausgebildet ist, die aktuell vorliegende Auslastung der Rechenvorrichtung (40, 50) gegenüber einem vorgegebenen Lastgrenzwert zu überprüfen, und wenn die aktuelle Auslastung höher als der Lastgrenzwert ist, die Anfragenachricht an einen Lastabwehrcontainer (45, 55), der mindestens eine gegenüber dem Arbeitscontainer (44, 54) modifizierte Abarbeitungsform der Anwendung bereitstellt, weiterzuleiten.

13. Rechenvorrichtung (40) nach Anspruch 12, wobei die Steuerungseinheit (42) in einer Lastverteilungseinrichtung (43) ausgebildet ist, und die Lastverteilungsvorrichtung (43) die Anfragenachricht abhängig vom Überprüfungsergebnis an einen Arbeitscontainer (44) oder an einen Lastabwehrcontainer (45) weiterleitet.

14. Rechenvorrichtung nach Anspruch 12, wobei die die Steuerungseinheit (53) in einem Arbeitscontainer (54), insbesondere in Form einer Stellvertretereinheit, ausgebildet ist.

15. Computerprogrammprodukt, umfassend ein Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 11 durchzuführen.
